# EUROPÄISCHE PATENTSCHRIFT

(11) **EP 4 008 612 B1**
(45) Veröffentlichungstag und Bekanntmachung des Hinweises auf die Patenterteilung: **06.08.2025**
(21) Anmeldenummer: 21209120.1
(22) Anmeldetag: 18.11.2021
(51) Int. Cl.: B62D 33/06

(54) **LAGE- UND HÖHENREGELUNG EINER FAHRERKABINE RELATIV ZUM FAHRZEUGCHASSIS**
POSITION AND HEIGHT CONTROL OF A DRIVERýS CAB RELATIVE TO THE VEHICLE CHASSIS
RÉGULATION DE LA POSITION ET DE LA HAUTEUR D'UNE CABINE DE CONDUCTEUR PAR RAPPORT AU CHÂSSIS DU VÉHICULE

(30) Priorität: 04.12.2020 DE 102020215363
(43) Veröffentlichungstag der Anmeldung: 08.06.2022
(73) Patentinhaber: ContiTech Deutschland GmbH, 30175 Hannover (DE)
(72) Erfinder: Braun, Patrik, 30165 Hannover (DE); Gerami-Manesch, Bijan, 30165 Hannover (DE); Möllenbruck, Bernd, 30165 Hannover (DE)
(74) Vertreter: Preusser, Andrea

(56) Entgegenhaltungen:
- EP-A1- 2 808 233
- DE-A1- 4 321 152
- US-A- 5 899 288
- US-A1- 2004 112 659

## Beschreibung

Die Erfindung betrifft eine Vorrichtung zur Lage- und Höhenregelung einer Fahrerkabine relativ zum Chassis, wobei die Fahrerkabine mit Hilfe von Stellgliedern auf dem Chassis höhenverstellbar gelagert ist. Die Erfindung betrifft ebenfalls Fahrzeug mit einer auf dem Chassis gelagerten und verstellbaren Fahrerkabine und einer Vorrichtung zur Lage- und Höhenregelung einer Fahrerkabine relativ zum Chassis eines Fahrzeugs. Darüber hinaus betrifft die Erfindung ein Verfahren zur Lage- und Höhenregelung einer Fahrerkabine relativ zum Chassis eines Fahrzeugs, wobei die Fahrerkabine mit Hilfe von Stellgliedern auf dem Chassis höhenverstellbar gelagert ist.

### Stand der Technik

Fahrerkabinen für Lastkraftwagen oder landwirtschaftliche Fahrzeuge sind üblicher Weise über Feder- und Dämpfungselemente, meist in Form von Luftfedern, auf dem Chassis eines Fahrzeugs gelagert. Die Feder- und Dämpfungselemente entkoppeln die Fahrerkabine von dem Chassis, absorbieren Stöße und Vibrationen und gewährleisten einen angenehmen Fahrkomfort. Bekannter Weise sind die Fahrerkabinen passiv gefedert und gedämpft. Die Lage der Fahrerkabine ist relativ zu der Lage des Chassis nicht verstellbar.Aus dem Stand der Technik sind bereits Lösungen bekannt, mit denen eine Fahrerkabine relativ zum Fahrzeugchassis verstellt werden kann. Die DE4321152A1 offenbart ein landwirtschaftliches Fahrzeug, dessen Kabine über Gummilager auf dem Rumpf des Fahrzeuges gelagert ist. Zur Steigerung des Fahrkomforts sind zwischen Kabine und Rumpf zusätzlich zwei Stellglieder angeordnet, die in Abhängigkeit einer sensorbasierten Lageerkennung des Fahrzeuges bzw. der Kabine durch eine im Fahrzeug vorgesehene Steuereinheit betätigt werden. Nachteiliger Weise werden in diesem Fall für die Lageregelung zusätzliche Stellglieder benötigt, welche zu erhöhten Systemkosten führen. Ein weiteres Beispiel ist aus der US 5 899 288 A bekannt.

### Aufgabe

Der Erfindung liegt die Aufgabe zugrunde, eine Vorrichtung sowie ein Verfahren zur Lage- und Höhenregelung einer Fahrerkabine von Fahrzeugen zu entwickeln, sodass die Kabinenneigung unter Berücksichtigung von Sensordaten eingestellt werden kann. Insbesondere liegt die Aufgabe darin, die Neigungsebene der Fahrerkabine parallel zu der Neigungsebene des Fahrzeugchassis bei gleichbleibendem Höhenabstand der Fahrerkabine zum Fahrzeugchassis zu halten. Um die Systemkosten für die Lage- und Höhenregelung der Fahrerkabine gering zu halten, besteht eine weitere Aufgabe darin, die Lösung mit einem minimalen Aufwand von zusätzlichen Sensoren unter größtmöglicher Nutzung bereits am Fahrzeug vorhandener Sensoren zu realisieren.

### Lösung der Aufgabe

Die Lösung dieser Aufgabe ergibt sich durch die Vorrichtung zur Lage- und Höhenregelung einer Fahrerkabine nach dem unabhängigen Anspruch 1.

Weitere vorteilhafte Ausbildungen sind in den abhängigen Ansprüchen offenbart.

Der Anspruch 7 offenbart ein Fahrzeug mit einer auf dem Chassis gelagerten und verstellbaren Fahrerkabine und einer Vorrichtung zur Lage- und Höhenregelung einer Fahrerkabine relativ zum Chassis.

Weiterhin offenbart Anspruch 8 ein Verfahren zur Lage- und Höhenregelung einer Fahrerkabine relativ zum Chassis eines Fahrzeugs.

### Vorteile der Erfindung

Der Anspruch 1 offenbart eine erfindungsgemäße Vorrichtung zur Lage- und Höhenregelung einer Fahrerkabine relativ zum Chassis eines Fahrzeuges, wobei die Fahrerkabine mit Hilfe von Stellgliedern auf dem Chassis höhenverstellbar gelagert ist. Hierbei wird mindestens eines der Stellglieder über einen Höhensensor überwacht. Die Überwachung der Höhe kann wahlweise über eine direkte Messung mit Hilfe eines am Stellglied befindlichen oder mit diesem in Verbindung stehenden Höhensensors erfolgen, oder indirekt über die Messung des Abstands zwischen Fahrerkabine und Chassis an einer beliebigen Messstelle, die eine definierte geometrischen Beziehung zu einem der Stellglieder aufweist, worüber auf die Höhe des Stellgliedes rückgeschlossen werden kann. Die Höhenmessung kann wahlweise auf verschiedenen Messprinzipien basieren. Beispielsweise sei das optische Messprinzip mittels Lasersensoren oder ein akustisches Messprinzip basierend auf Ultraschallsensoren erwähnt. Darüber hinaus können auch induktive oder kapazitive Sensoren verwendet werden.

Darüber hinaus ist ein erster Sensor an der Fahrerkabine zur Lagebestimmung der Fahrerkabine und ein zweiter Sensor am Chassis zur Lagebestimmung des Chassis vorgesehen. Die Fahrerkabine ist auf dem Chassis des Fahrzeugs schwingungsdämpfend gelagert. Da die Fahrerkabine und das Chassis mit anderen Worten gesagt voneinander entkoppelt sind, ist eine relative Verschränkung der Neigungsebenen, man spricht auch von einer Neigungswinkeldifferenz, von Fahrerkabine und Chassis zueinander möglich. Zur Bestimmung der jeweiligen Lage der Neigungsebene der Fahrerkabine und des Chassis, sind ein erster Sensor an der Fahrerkabine und ein zweiter Sensor an dem Chassis vorgesehen. Der zweite Sensor kann genauer gesagt am Chassis, am Motor, im Fahrwerk, im Antriebsstrang oder an sonstigen Stellen im Fahrzeug angeordnet sein; wichtig darunter sind aber im Zusammenhang mit der erfindungsgemäßen Lösung insbesondere sowohl die Sensoren, die in oder an der Kabine starr montiert sind, als auch die Sensoren, die starr mit dem Chassis verbunden sind und ein Höhensensor, der die Höhe mindestens eines der Stellglieder überwacht.

Eine Recheneinheit ist dazu ausgebildet, die Signale des Höhensensors, des ersten Sensors zur Lagebestimmung der Fahrerkabine und des zweiten Sensors zur Lagebestimmung des Chassis derart zu verarbeiten, dass aus den Signalen des Höhensensors, des ersten Sensors und des zweiten Sensors die aktuelle Höhe der übrigen Stellglieder bestimmt und, bei Überschreiten oder Unterschreiten vorgegebener Grenzwerte, Steuersignale zur Höhenverstellung aller Stellglieder ermittelt und an die Stellglieder ausgegeben werden. Die Recheneinheit ermittelt zum einen die Verschränkung oder Neigungswinkeldifferenz der Neigungsebenen von Fahrerkabine und Chassis. Zum anderen kann über das Signal des Höhensensors Rückschluss auf die Höhe eines der Stellglieder gezogen werden. Insbesondere kann durch den Höhensensor die Abweichung der Höhe von der Neutralposition des Stellgliedes ermittelt werden. Die Neutralposition des Stellgliedes kann als Referenz- oder Sollwert in der Recheneinheit hinterlegt sein, was gleichzeitig den Sollabstand der Fahrerkabine zum Chassis repräsentiert.

Die Signale des Höhensensors, des ersten Sensors zur Lagebestimmung der Fahrerkabine und des zweiten Sensors zur Lagebestimmung des Chassis können in einer Recheneinheit mit Hilfe eines Algorithmus verarbeitet werden, welcher aus den Signalen des Höhensensors, zur Ermittlung der Höhe eines der Stellglieder, und des ersten und zweiten Sensors zur Lagebestimmung der Fahrerkabine und / oder des Chassis die aktuelle Höhe der übrigen Stellglieder bestimmt und bei Überschreiten oder Unterschreiten vorgegebener Grenzwerte Steuersignale zur Höhenverstellung aller Stellglieder ermittelt und an die Stellglieder ausgibt.

Im Falle einer detektierten Neigungswinkeldifferenz zwischen Fahrerkabine und Chassis kann das in der Höhe überwachte Stellglied auf den kalibrierten Sollwert eingestellt werden, woraufhin die übrigen Stellglieder derart eingestellt werden können, dass die Neigungswinkeldifferenz zwischen Fahrerkabine und Chassis gleich Null oder einen anderen definierten Sollwert ergibt. In Folge dessen befinden sich alle Stellglieder auf demselben Höhenniveau, woraufhin sich die Fahrerkabine in einem definierten Höhenabstand zum Chassis befindet. Gemäß einer anderen Regelungslogik kann eine Abweichung vom Sollwert des in der Höhe überwachten Stellgliedes dazu führen, dass dieses auf den kalibrierten Sollwert eingestellt wird, woraufhin die übrigen Stellglieder derart eingestellt werden können, dass die Neigungswinkeldifferenz zwischen Fahrerkabine und Chassis gleich Null oder einen anderen definierten Sollwert ergibt.

Durch die Kombination von einem ersten Sensor zur Bestimmung der Neigung der Fahrerkabine und einem zweiten Sensor zur Bestimmung der Neigung des Chassis mit der Höhenmessung eines Stellgliedes können alle relevanten Informationen für eine Lage- und Höhenregelung der Fahrerkabine relativ zum Chassis eines Fahrzeuges zur Verfügung gestellt werden. Verglichen mit konventionellen Überlegungen zur Höhenregelung der Fahrerkabine zum Chassis, bei der jedes der Stellglieder über einen Höhensensor verfügt oder mit einem solchen in Verbindung steht, kann mit der erfindungsgemäßen Lösung die Anzahl der Sensoren verringert werden. Unter Berücksichtigung eines bereits vorhandenen Neigungssensors für das Chassis wird für eine funktionsfähige Lage- und Höhenregelung ein weiterer Neigungssensor für die Fahrerkabine sowie ein Höhensensor zur Ermittlung der Höhe eines der Stellglieder benötigt. Bei einer Anzahl von drei Stellgliedern kann sich die Anzahl der Sensorkomponenten im Bereich der Stellglieder bereits um zwei besonders kostenintensive Höhensensoren verringern.

Als besonders geeignet zur Anwendung des erfindungsgemäßen Verfahrens seien Lastkraftwagen und landwirtschaftliche Fahrzeuge erwähnt. Während es in besonders unwegsamen Gelände, beispielsweise bei permanenter Fahrt quer zum Hang vorteilhaft sein kann, die Neigungsebene der Fahrerkabine abweichend von der Neigungsebene des Chassis waagerecht auszurichten, kann es sich hingegen bei Fahrten auf der Straße komfortsteigernd auswirken, die Neigungsebenen von Fahrerkabine und Chassis parallel zu halten. Insbesondere bei landwirtschaftlichen Fahrzeugen, die häufig in unwegsamen Gelände zum Einsatz kommen, ist eine aktive Lageregelung der Fahrerkabine äußerst vorteilhaft. So kann, beispielsweise bei Fahrten quer zur Hangneigung, die Fahrerkabine auf der den Hang abfallenden Seite angehoben werden, sodass der Fahrer in der Kabine keinen seitlich wirkenden Hangabtriebskräften ausgesetzt ist und über lange Dauer konzentriert und komfortabel seine Arbeit verrichten kann.

Gemäß einem weiteren Aspekt sind die Stellglieder in Form verstellbarer Luftfederelemente ausgebildet. Die Verwendung von Luftfedern als Stellglieder ist besonders vorteilhaft, da die aktive Lageregelung der Fahrerkabine durch zum Teil bereits vorhandene Fahrzeugkomponenten realisiert werden kann. Dies ermöglicht eine kostengünstige Umsetzung der gestellten Aufgabe. Die erfindungsgemäße Vorrichtung kann in sämtlichen Fahrzeugen mit luftgefederter oder teilluftgefederter Fahrerkabine zum Einsatz kommen. Insbesondere sind hierzu höhenverstellbare Luftfederelemente geeignet, deren Anlenkpunkte an Karosserie oder Fahrwerk einerseits und Fahrerkabine andererseits in ihrem Abstand voneinander entweder mechanisch oder pneumatisch verstellbar sind.

Gemäß einem weiteren Aspekt sind die Luftfederelemente als Feder- und Dämpfungselemente ausgebildet. Dies ermöglicht auf vorteilhafte Weise eine besonders kompakte und platzsparende Ausführungsform eines Feder-Dämpfungssystems, indem die Feder- und Dämpfungsfunktion in einem Luftfederelement vereint ist.

Gemäß einem weiteren Aspekt verfügt mindestens eines der Stellglieder über einen integrierten Höhensensor oder steht zumindest mit einem Höhensensor in Verbindung, sodass darüber der Abstand zwischen Chassis und Fahrerkabine ermittelt und eingestellt werden kann. Die Höhenmessung kann wahlweise auf verschiedenen Messprinzipien basieren. Beispielsweise sei das optische Messprinzip mittels Lasersensoren oder ein akustisches Messprinzip basierend auf Ultraschallsensoren erwähnt. Darüber hinaus können auch induktive oder kapazitive Sensoren verwendet werden.

Zur Realisierung einer optimalen Federung ist es vorteilhaft, dass sich das Stellglied in mittlerer, neutraler Höhenposition befindet. So kann ein optimaler Federweg / Verstellweg sowohl für das Ein- als auch das Ausfedern gewährleistet werden. Diese neutrale Höhenposition des Stellgliedes kann als Referenzwert für den Abstand der Fahrerkabine zum Chassis angenommen werden. Durch Kenntnis über die Neigungsdaten von Fahrerkabine und Chassis sowie die Höhe mindestens eines Stellgliedes kann die Neigungsregelung der Fahrerkabine unter optimaler Höheneinstellung der einzelnen Stellglieder gewährleistet werden.

Gemäß einem weiteren Aspekt ist der erste Sensor und / oder der zweite Sensor ein 2- oder 3-Achs Beschleunigungssensor. Dies bietet den Vorteil, aus einem besonders großen Portfolio von Standard-Komponenten wählen zu können, um eine kostengünstige Umsetzung des Regelungssystems realisieren zu können.

Gemäß einem weiteren Aspekt ist der Höhensensor als ein Ultraschallsensor ausgebildet. Die Wahl eines Ultraschallsensors ermöglicht auf vorteilhafte Art und Weise die Umsetzung eines besonders robusten und dauerhaltbaren Systems.

Eine weitere Ausführungsform sieht ein Fahrzeug mit der erfindungsgemäßen Vorrichtung vor. Da insbesondere bei Fahrzeugen die Kosten für technische Komponenten gering gehalten werden müssen, bietet die erfindungsgemäße Vorrichtung dort insbesondere den Vorteil, dass eine Vielzahl bereits im Fahrzeug vorhandener Komponenten miteinander vernetzt werden, sodass die erfindungsgemäße Lösung unter einem minimalen Mehraufwand an Kosten realisiert werden kann.

Eine weitere Ausführungsform offenbart ein Verfahren zur Lage- und Höhenregelung einer Fahrerkabine relativ zum Chassis eines Fahrzeugs, wobei die Fahrerkabine mit Hilfe von Stellgliedern auf dem Chassis höhenverstellbar gelagert ist. Das erfindungsgemäße Verfahren weist hierbei die folgenden Schritte auf:
- Erfassen der Höhe mindestens eines der Stellglieder (3) mittels eines Höhensensors (9),
- Erfassen der Lage der Fahrerkabine (1) mittels eines ersten Sensors (7) an der Fahrerkabine,
- Erfassen der Lage des Chassis (2) mittels eines zweiten Sensors (8) am Chassis,
- Bestimmen der aktuellen Höhe der übrigen Stellglieder (3) mittels einer Recheneinheit (5) aus den Signalen des Höhensensors (9), des ersten Sensors (7) und des zweiten Sensors (8),
- und, bei Überschreiten oder Unterschreiten vorgegebener Grenzwerte, Ermitteln der Steuersignale zur Höhenverstellung aller Stellglieder (3) und Ausgeben der Steuersignale an die Stellglieder (3).

Hierbei erfasst ein Höhensensor die Höhe mindestens eines der Stellglieder. Dies kann über eine direkte Messung mit Hilfe eines am Stellglied befindlichen oder mit diesem in Verbindung stehenden Höhensensors erfolgen, oder indirekt über die Messung des Abstands zwischen Fahrerkabine und Chassis an einer beliebigen Messstelle, die eine definierte geometrischen Beziehung zu einem der Stellglieder aufweist, worüber auf die Höhe des Stellgliedes rückgeschlossen werden kann.

Ein erster Sensor an der Fahrerkabine erfasst die Lage der Fahrerkabine und ein zweiter Sensor am Chassis erfasst die Lage des Chassis. Eine Recheneinheit verarbeitet die Signale des Höhensensors zur Bestimmung der Höhe mindestens eines der Stellglieder, des ersten Sensors und des zweiten Sensors mit Hilfe eines Algorithmus. Hierbei wird aus den Signalen des Höhensensors, des ersten Sensors und des zweiten Sensors die aktuelle Höhe der übrigen Stellglieder bestimmt und es werden bei Überschreiten oder Unterschreiten vorgegebener Grenzwerte Steuersignale zur Höhenverstellung aller Stellglieder ermittelt und an die Stellglieder ausgegeben.

Mit anderen Worten gesagt führt der Algorithmus einen permanenten Abgleich des vorliegenden Messwertes des Höhensensors mit dem Referenzwert durch. Der Referenzwert repräsentiert hierbei die neutrale Höhenposition des Stellgliedes. Sobald eine Abweichung vom Referenzwert identifiziert wird, wird das Stellglied in dessen Höhe auf den ursprünglichen Referenzwert eingeregelt. Die Höhenregelung der übrigen Stellglieder kann über den Ausgleich der Neigungswinkeldifferenz erfolgen, die sich aus den Sensordaten des ersten Sensors zur Lagebestimmung der Fahrerkabine und des zweiten Sensors zur Lagebestimmung des Chassis errechnet.

Ein Neigungswinkelausgleich zwischen Fahrerkabine und Chassis sowie die Einstellung des in der Höhe überwachten Stellgliedes auf dessen Referenzwert ermöglicht eine Regelung der Lage und Höhe der Fahrerkabine relativ zum Chassis eines Fahrzeugs. Es zeigt sich als besonders vorteilhaft, dass der Algorithmus zur Regelung nur eine sehr geringe Anzahl an Sensordaten auszuwerten hat. Dies erleichtert die Programmierung und verringert die Fehleranfälligkeit

### Erläuterung Figuren

Anhand der Zeichnung wird im Folgenden ein Ausführungsbeispiel der Erfindung näher erläutert.

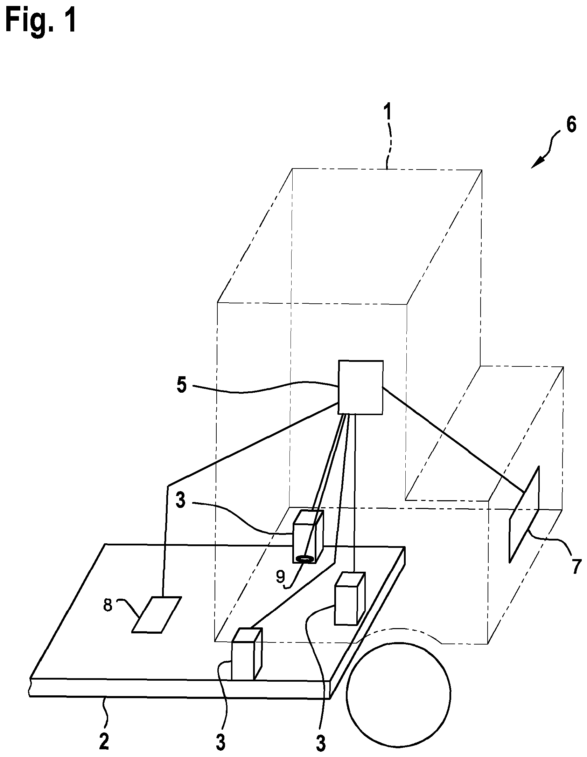

Fig. 1 zeigt dazu die schematische Darstellung des Vorderwagens eines Lastkraftwagens 6 (LKW). Hierbei ist die Fahrerkabine 1 über Luftfederelemente 3 auf dem Chassis 2 des LKW 6 schwingungsdämpfend gelagert. Des Weiteren ist an der Front des LKW 6 ein Neigungssensor 7 dargestellt. Die Positionierung des Neigungssensors 7 an der Front des LKW 6 ist exemplarisch gewählt und schließt andere Positionierungen nicht aus. Die Fahrerkabine 1 ist über drei Luftfederelemente 3 auf dem Chassis 2 gelagert, die so angeordnet sind, dass eine aktive Verstellung der Fahrerkabine 1 sowohl um eine über die Kabinenbreite verlaufende Achse als auch um eine in Kabinenlänge verlaufende Achse möglich ist. Dies ist möglich, da die Luftfederelemente 3 als Stellglieder ausgebildet sind, indem durch Veränderung des Luftvolumens im Inneren des Luftfederbalges eine Höhenänderung des Luftfederelementes 3 erfolgt, die sich unmittelbar auf die darauf gelagerte Fahrerkabine 1 überträgt. Die Veränderung des Luftvolumens erfolgt durch das Öffnen von Ventilen vor den jeweiligen Luftfederelementen, die mit einer Druckluftversorgung verbunden sind. Durch eine zusammenhängende Ansteuerung jedes der einzelnen Luftfederelemente 3 kann die Lage der Fahrerkabine 1 um ihre Längs- und / oder Querachse geregelt werden. Die für die Lageregelung erforderlichen Daten werden über die Informationen vom Neigungssensor der Fahrerkabine 7, vom Neigungssensor des Chassis 8, sowie des Höhensensors 9 eines der drei Luftfederelemente bezogen, innerhalb einer Recheneinheit 5 zusammengeführt und zur Ausgabe von Steuerungssignalen an die einzelnen Luftfederelemente 3 ausgewertet. Der Höhensensor 9 kann, wie in Fig. 1 dargestellt, in das Luftfederelement 3 integriert sein, aber auch als externer Sensor mit dem Luftfederelement 3 in Verbindung stehen oder an einer beliebigen Messstelle zur Abstandsmessung zwischen Fahrerkabine 7 und Chassis 8 installiert sein, wobei die Messstelle mit dem Luftfederelement 3 in einer definierten geometrischen Beziehung zur Ermittlung der Höhe des Luftfederelementes steht.

Die Neigungssensoren 7, 8 beschreiben die Lage der Ebenen der Fahrerkabine 1 und des Chassis 2. Die Informationen der Neigungssensoren 7, 8 werden in der Recheneinheit 5 ausgewertet, wobei eine Neigungswinkeldifferenz ermittelt wird. Diese Neigungswinkeldifferenz wird in zwei Achsen berechnet, wobei die eine Achse die Fahrzeuglängsachse und die zweite Achse die Fahrzeugquerachse beschreibt. Als weitere Regelgröße wird über den Höhensensor 9 die Höhe eines Luftfederelementes 3 ermittelt. Der Höhensensor 9 ist auf einen Sollwert kalibriert, welcher der mittleren, neutralen Höhenposition des Luftfederelementes 3 entspricht. In dieser Position verfügt das Luftfederelement 3 über den jeweils optimalen Ein- und Ausfederweg. Der kalibrierte Sollwert des Höhensensors 9 repräsentiert den Referenzwert für den Abstand der Fahrerkabine 1 zum Chassis 2. Im Falle einer detektierten Neigungswinkeldifferenz zwischen Fahrerkabine 1 und Chassis 2 wird das in der Höhe überwachte Luftfederelement 3 auf den kalibrierten Sollwert eingestellt, woraufhin die übrigen Luftfederelemente 3 derart eingestellt werden, dass die Neigungswinkeldifferenz zwischen Fahrerkabine 1 und Chassis 2 gleich Null ergibt. In Folge dessen befinden sich alle Luftfederelemente 3 auf demselben Höhenniveau, woraufhin sich die Fahrerkabine 1 in einem definierten Höhenabstand zum Chassis 2 befindet.

### Bezugszeichenliste

- 1: Fahrerkabine
- 2: Chassis
- 3: verstellbares Luftfederelement
- 5: Recheneinheit
- 6: Fahrzeug
- 7: Erster Neigungssensor an der Fahrerkabine
- 8: Zweiter Neigungssensor an dem Chassis
- 9: Höhensensor

## Patentansprüche

1. Vorrichtung zur Lage- und Höhenregelung einer Fahrerkabine (1) relativ zum Chassis (2) eines Fahrzeugs,
wobei die Fahrerkabine (1) mit Hilfe von Stellgliedern (3) auf dem Chassis (2) höhenverstellbar gelagert ist,
wobei mindestens eines der Stellglieder (3) über einen Höhensensor (9) überwacht wird,
wobei ein erster Sensor (7) an der Fahrerkabine zur Lagebestimmung der Fahrerkabine (1) vorgesehen ist,
wobei ein zweiter Sensor (8) am Chassis zur Lagebestimmung des Chassis (2) vorgesehen ist, **dadurch gekennzeichnet, dass** eine Recheneinheit (5) ausgebildet ist, die Signale des Höhensensors (9), des ersten Sensors (7) und des zweiten Sensors (8) derart zu verarbeiten, dass aus den Signalen des Höhensensors (9), des ersten Sensors (7) und des zweiten Sensors (8) die aktuelle Höhe der übrigen Stellglieder (3) bestimmt und bei Überschreiten oder Unterschreiten vorgegebener Grenzwerte Steuersignale zur Höhenverstellung aller Stellglieder (3) ermittelt und an die Stellglieder (3) ausgegeben werden.

2. Vorrichtung nach Anspruch 1,
**dadurch gekennzeichnet, dass**
die Stellglieder (3) in Form verstellbarer Luftfederelemente (3) ausgebildet sind.

3. Vorrichtung nach Anspruch 2,
**dadurch gekennzeichnet, dass**
die Luftfederelemente (3) als Feder- und Dämpfungselemente (3) ausgebildet sind.

4. Vorrichtung nach einem der vorhergehenden Ansprüche,
**dadurch gekennzeichnet, dass**
der Höhensensor (9) in das Stellglied (3) integriert ist oder mit dem Stellglied (3) in Verbindung steht.

5. Vorrichtung nach einem der vorhergehenden Ansprüche,
**dadurch gekennzeichnet, dass**
der erste Sensor (7) und / oder der zweite Sensor (8) ein 2- oder 3-Achs Beschleunigungssensor (7, 8) ist.

6. Vorrichtung nach einem der vorherigen Ansprüche,
**dadurch gekennzeichnet, dass**
der Höhensensor (9) als ein Ultraschallsensor (9) ausgebildet ist.

7. Fahrzeug mit einer auf dem Chassis (2) gelagerten und verstellbaren Fahrerkabine (1) und einer Vorrichtung zur Lage- und Höhenregelung einer Fahrerkabine (1) relativ zum Chassis (2) eines Fahrzeugs nach einem der vorhergehenden Ansprüche.

8. Verfahren zur Lage- und Höhenregelung einer Fahrerkabine (1) relativ zum Chassis (2) eines Fahrzeugs,
wobei die Fahrerkabine (1) mit Hilfe von Stellgliedern (3) auf dem Chassis (2) höhenverstellbar gelagert ist,
wobei das Verfahren wenigstens die folgenden Schritte umfasst:
Erfassen der Höhe mindestens eines der Stellglieder (3) mittels eines Höhensensors (9),
Erfassen der Lage der Fahrerkabine (1) mittels eines ersten Sensors (7) an der Fahrerkabine,
Erfassen der Lage des Chassis (2) mittels eines zweiten Sensors (8) am Chassis, **gekennzeichnet durch** wenigstens die Schritte: Bestimmen der aktuellen Höhe der übrigen Stellglieder (3) mittels einer Recheneinheit (5) aus den Signalen des Höhensensors (9), des ersten Sensors (7) und des zweiten Sensors (8), und,
bei Überschreiten oder Unterschreiten vorgegebener Grenzwerte, Ermitteln der Steuersignale zur Höhenverstellung aller Stellglieder (3) und Ausgeben der Steuersignale an die Stellglieder (3).

## Claims

1. Device for controlling the position and height of a driver's cab (1) relative to the chassis (2) of a vehicle,
wherein the driver's cab (1) is mounted on the chassis (2) so as to be height-adjustable using actuators (3),
wherein at least one of the actuators (3) is monitored via a height sensor (9), wherein a first sensor (7) is provided on the driver's cab for the purpose of determining the position of the driver's cab (1),
wherein a second sensor (8) is provided on the chassis for the purpose of determining the position of the chassis (2), **characterized in that** a computing unit (5) is designed to process the signals from the height sensor (9), from the first sensor (7) and from the second sensor (8) in such a way that the current height of the remaining actuators (3) is determined from the signals from the height sensor (9), from the first sensor (7) and from the second sensor (8) and, if predefined limit values are exceeded or undershot, control signals for adjusting the height of all actuators (3) are determined and output to the actuators (3).

2. Device according to Claim 1,
**characterized in that**
the actuators (3) are in the form of adjustable air spring elements (3).

3. Device according to Claim 2,
**characterized**
**in that** the air spring elements (3) are designed as spring and damping elements (3).

4. Device according to one of the preceding claims,
**characterized in that**
the height sensor (9) is integrated in the actuator (3) or is connected to the actuator (3).

5. Device according to one of the preceding claims,
**characterized in that**
the first sensor (7) and/or the second sensor (8) is/are a 2-axis or 3-axis acceleration sensor (7, 8).

6. Device according to one of the preceding claims,
**characterized in that**
the height sensor (9) is designed as an ultrasonic sensor (9).

7. Vehicle having an adjustable driver's cab (1) mounted on the chassis (2) and a device for controlling the position and height of a driver's cab (1) relative to the chassis (2) of a vehicle according to one of the preceding claims.

8. Method for controlling the position and height of a driver's cab (1) relative to the chassis (2) of a vehicle,
wherein the driver's cab (1) is mounted on the chassis (2) so as to be height-adjustable using actuators (3),
wherein the method comprises at least the following steps:
detecting the height of at least one of the actuators (3) by means of a height sensor (9),
detecting the position of the driver's cab (1) using a first sensor (7) on the driver's cab,
detecting the position of the chassis (2) by means of a second sensor (8) on the chassis, **characterized by** at least the steps of: determining the current height of the remaining actuators (3) from the signals from the height sensor (9), from the first sensor (7) and from the second sensor (8) using a computing unit (5), and,
if predefined limit values are exceeded or undershot, determining the control signals for adjusting the height of all actuators (3) and outputting the control signals to the actuators (3).

## Revendications

1. Dispositif pour régler la position et la hauteur d'une cabine de conducteur (1) par rapport au châssis (2) d'un véhicule,
la cabine de conducteur (1) étant montée de manière réglable en hauteur sur le châssis (2) au moyen d'actionneurs (3),
au moins l'un des actionneurs (3) étant surveillé par un capteur de hauteur (9),
un premier capteur (7) étant prévu sur la cabine de conducteur pour déterminer la position de la cabine de conducteur (1),
un deuxième capteur (8) étant prévu sur le châssis pour déterminer la position du châssis (2), **caractérisé en ce que**
une unité de calcul (5) est conçue pour traiter les signaux du capteur de hauteur (9), du premier capteur (7) et du deuxième capteur (8) de telle sorte que, à partir des signaux du capteur de hauteur (9), du premier capteur (7) et du deuxième capteur (8), la hauteur actuelle des autres actionneurs (3) est déterminée, et, en cas de dépassement ou de non-atteinte de valeurs limites prédéfinies, des signaux de commande pour le réglage en hauteur de tous les actionneurs (3) sont déterminés et transmis aux actionneurs (3).

2. Dispositif selon la revendication 1,
**caractérisé en ce que**
les actionneurs (3) sont conçus sous la forme d'éléments à ressort pneumatique réglables (3).

3. Dispositif selon la revendication 2,
**caractérisé en ce que**
les éléments à ressort pneumatique (3) sont conçus sous la forme d'éléments de ressort et d'amortissement (3).

4. Dispositif selon l'une des revendications précédentes,
**caractérisé en ce que**
le capteur de hauteur (9) est intégré dans l'actionneur (3) ou est relié à l'actionneur (3).

5. Dispositif selon l'une des revendications précédentes,
**caractérisé en ce que**
le premier capteur (7) et/ou le deuxième capteur (8) est un capteur d'accélération à 2 ou 3 axes (7, 8).

6. Dispositif selon l'une des revendications précédentes,
**caractérisé en ce que**
le capteur de hauteur (9) est conçu sous la forme d'un capteur à ultrasons (9).

7. Véhicule comprenant une cabine de conducteur (1) montée sur le châssis (2) et réglable, et un dispositif pour régler la position et la hauteur d'une cabine de conducteur (1) par rapport au châssis (2) d'un véhicule selon l'une des revendications précédentes.

8. Procédé pour régler la position et la hauteur d'une cabine de conducteur (1) par rapport au châssis (2) d'un véhicule,
la cabine de conducteur (1) étant montée de manière réglable en hauteur sur le châssis (2) au moyen d'actionneurs (3),
le procédé comprenant les étapes suivantes :
détecter la hauteur d'au moins un des actionneurs (3) au moyen d'un capteur de hauteur (9),
détecter la position de la cabine de conducteur (1) au moyen d'un premier capteur (7) sur la cabine de conducteur,
détecter la position du châssis (2) au moyen d'un deuxième capteur (8) sur le châssis, **caractérisé par** au moins les étapes suivantes : déterminer la hauteur actuelle des autres actionneurs (3) au moyen d'une unité de calcul (5) à partir des signaux du capteur de hauteur (9), du premier capteur (7) et du deuxième capteur (8), et,
en cas de dépassement de valeurs limites prédéfinies ou de non-atteinte de celles-ci, déterminer les signaux de commande pour le réglage en hauteur de tous les actionneurs (3) et émettre les signaux de commande vers les actionneurs (3).
